# FASCICULE DE BREVET EUROPEEN

(11) **EP 1 679 124 B1**
(45) Date de publication et mention de la délivrance du brevet: **11.11.2009**
(21) Numéro de dépôt: 06290035.2
(22) Date de dépôt: 06.01.2006
(51) Int. Cl.: B04B 5/04

(54) **Dispositif de séparation comprenant un canal de séparation et un contre-canal**
Trennvorrichtung mit einem Trennkanal und einem Gegenkanal
Separation device with a separation channel and a counter channel

(30) Priorité: 07.01.2005 FR 0500151
(43) Date de publication de la demande: 12.07.2006
(73) Titulaire: Universite de Limoges, 87032 Limoges Cedex 01 (FR)
(72) Inventeur: Cardot, Philippe, F-87000 Limoges (FR); Battu, Serge, F-87000 Limoges (FR); Sarrazin, Robert, F-87430 Verneuil sur Vienne (FR)
(74) Mandataire: Portal, Gérard

(56) Documents cités:
- EP-A- 0 230 899
- US-A- 3 175 762
- US-A- 4 353 795
- US-A- 4 743 227

## Description

L'invention concerne un dispositif de séparation de solutions contenant des substances en suspension dans un liquide porteur, avantageusement utilisé comme bol de séparation dans une centrifugeuse, de préférence par une technique de fractionnement par couplage flux-force (FFF)

### ETAT DE L'ART

Il est connu dans l'état de la technique, comme par exemple du brevet US 4 743 227 que l'on peut effectuer la séparation de solutions contenant des substances en suspension dans un liquide porteur par une technique de séparation comme le fractionnement par couplage flux-force en utilisant un canal de forme annulaire de section transversale rectangulaire. Le brevet US 4 284 498 délivré à Grant et al. (Du pont de Nemours and Company) fait également mention d'un canal annulaire de section transversale rectangulaire.

Les dispositifs décrits dans les documents de l'état de technique posent cependant le problème de ne pas obtenir une séparation reproductible des substances en suspension, en particulier lorsque ces substances sont des cellules. Ceci se révèle notamment par des temps de rétention qui diffèrent pour une même espèce sans que les conditions de séparation varient, ce qui ne permet pas une exploitation correcte de la séparation, notamment dans le cas de cellules vivantes. Ceci est également visible dans la forme des pics d'élution qui n'est pas de forme Gaussienne.

Les présents inventeurs, en particulier le Pr. CARDOT, ont également effectué plusieurs publications dans ce domaine. Ils ont notamment perfectionné la sédimentation par fractionnement flux-force, en particulier pour la séparation de cellules humaines vivantes en utilisant la force de gravité induite par la rotation d'un bol de séparation. Cependant ces dispositifs ont rencontré les mêmes problèmes que dans les dispositifs de l'art antérieur. Les présents inventeurs ont en particulier identifié un problème de déformation du volume de séparation défini par le canal annulaire de section transversale rectangulaire. Cette déformation intervient notamment lors du serrage du canal pour sa mise en place dans le bol de séparation.

### BUTS DE L'INVENTION

L'invention a pour but principal de résoudre le problème technique consistant en la fourniture d'un nouveau dispositif de séparation, notamment de fractionnement par couplage flux-force (FFF), permettant une séparation reproductible de substances en suspension dans un liquide porteur, en particulier en restaurant la forme Gaussienne des pics d'élution et/ou en obtenant des temps de rétention reproductibles.

L'invention a également pour but de résoudre le problème technique consistant en la fourniture d'un nouveau dispositif de séparation, notamment de FFF, en particulier en FFF par sédimentation (champ gravitationnel), permettant la séparation de cellules vivantes de manière reproductible. Ces cellules sont en particulier des cellules humaines, de préférence des cellules présentes dans les liquides physiologiques, en particulier dans le sang, comme les globules rouges du sang.

L'invention a aussi pour but de résoudre le nouveau problème technique consistant à trouver une solution technique qui évite la déformation d'un canal de séparation sensiblement annulaire de section sensiblement rectangulaire, en particulier d'un canal de séparation de FFF.

L'invention a encore pour but de résoudre le problème technique consistant en la fourniture d'un dispositif facilement démontable d'une part pour effectuer un nettoyage, notamment une stérilisation/décontamination, aisé ; et d'autre part permettre un changement de dispositif, en particulier de manière à modifier les propriétés du canal de séparation pour la séparation de substances différentes, éventuellement dans un liquide porteur différent. Ce changement est en particulier rendu nécessaire dans le cas fréquent de traitement de liquides biologiques différents en provenance de différents porteurs, notamment pour éviter les contaminations.

L'invention a encore pour but de résoudre le problème technique consistant en la fourniture d'un dispositif de séparation permettant une très grande souplesse d'utilisation, notamment en permettant de modifier les paramètres géométriques du dispositif de séparation de manière rapide tout en disposant d'un choix large quant au dispositif de séparation utilisé.

### DESCRIPTION DE L'INVENTION

### dispositif de séparation

Ainsi, la présente invention décrit dans un premier aspect un dispositif de séparation de solutions contenant des substances en suspension dans un liquide porteur, notamment dans le cadre d'une centrifugation, comprenant un boîtier comprenant une cavité définissant une surface interne sensiblement cylindrique d'une hauteur prédéterminée, et au moins un premier canal de séparation proprement dit de forme sensiblement cylindrique annulaire à section droite sensiblement rectangulaire, formé par la combinaison de trois éléments de montage d'une dimension suffisante pour, en position montée, recouvrir sensiblement complètement ladite surface interne sensiblement cylindrique de ladite cavité, à savoir un premier élément de montage dont une partie de paroi définit au moins une première paroi latérale dudit canal de séparation, un deuxième élément de montage comportant au moins un évidement définissant une deuxième paroi latérale dudit canal de séparation et la dimension dudit canal de séparation, et un troisième élément de montage venant se positionner contre le deuxième élément, définissant une troisième paroi latérale et complétant ledit canal de séparation, caractérisé en ce qu'il comprend au moins un deuxième canal dénommé contre canal, disposé en regard du premier canal de séparation, entre le premier élément de montage et ladite paroi interne de la cavité du boîtier.

Ceci permet très avantageusement de monter et/ou démonter très rapidement le canal et/ou le contre canal, notamment pour modifier les matériaux des éléments de montage les composant.

Ceci permet également très avantageusement de modifier les dimensions des différents éléments de montage, de manière notamment à modifier les paramètres de séparation comme le volume de séparation.

Avantageusement, l'épaisseur du deuxième élément de montage définit l'épaisseur du premier canal de séparation ; et en ce que l'épaisseur du contre canal est sensiblement identique à l'épaisseur du premier canal de séparation. Cette épaisseur est généralement comprise entre 0.050 et 2 mm, de préférence entre 0.070 et 0.200 mm, comme par exemple entre 0.100 et 0.175 mm.

De manière préférée, la section transversale du contre canal est supérieure à la section transversale du premier canal de séparation, notamment dans la direction correspondant en position montée à la paroi cylindrique.

De manière également préférée, le deuxième élément de montage comprenant ledit évidement est réalisé en un matériau ayant des propriétés mécaniques différentes du matériau du premier élément de montage et/ou du troisième élément de montage.

Selon un mode de réalisation, le deuxième élément de montage est réalisé en un matériau ayant des propriétés mécaniques suffisantes pour être essentiellement sans fluage, notamment sous l'effet d'une pression de serrage.

Avantageusement, le contre canal est formé par la combinaison d'un quatrième élément de montage disposé entre le premier élément de montage et la paroi interne du boîtier et comprenant un deuxième évidement au moins aussi grand que le premier évidement, ledit deuxième évidement étant disposé, à l'état monté, en regard du premier évidement, et un cinquième élément de montage disposé contre la paroi interne de ladite cavité du boîtier.

De préférence, le deuxième élément de montage est formé à partir d'une feuille essentiellement plane dans laquelle l'évidement précité est formé par découpe avec de préférence des bords d'extrémités latéraux biseautés.

De préférence, le quatrième élément de montage est réalisé en un matériau ayant des propriétés mécaniques similaires ou sensiblement identiques au matériau du deuxième élément de montage.

Avantageusement, le matériau du deuxième élément de montage est réalisé au moins en partie, ou de préférence totalement, en un matériau stérilisable et dont la surface peut être traitée pour limiter l'adsorption, en particulier une matière plastique choisie parmi le groupe consistant d'une feuille de plastique métallisée telle que le mylar, un polycarbonate, ou un métal ou alliage d'au moins un métal, en particulier un métal biocompatible tel que l'aluminium, un métal noble inoxydable.

Avantageusement, les autres éléments de montage (premier de élément de montage, troisième élément de montage, quatrième élément de montage, cinquième élément de montage) sont également réalisés dans un matériau stérilisable tel que défini dans le paragraphe ci-dessus.

De préférence, le second élément de montage et le quatrième élément de montage sont identiques quant à leur matière. Ce matériau est de préférence une feuille de plastique métallisée telle que le mylar dont l'épaisseur comme précédemment indiqué est de préférence comprise entre 0.050 et 2 mm, de préférence entre 0.070 et 0.200 mm, comme par exemple entre 0.100 et 0.175 mm. Avantageusement, l'épaisseur du quatrième élément de montage est supérieure d'environ 10 % à l'épaisseur du deuxième élément de montage. Par exemple l'épaisseur du quatrième élément de montage est de 110 µm quand l'épaisseur du deuxième élément de montage et de 100 µm.

Le premier, le troisième et le cinquième élément de montage sont également réalisés de préférence dans un matériau identique dont l'épaisseur est de préférence comprise entre 0.050 et 2 mm, de préférence entre 0.070 et 0.200 mm, comme par exemple entre 0.100 et 0.175 mm. Ce matériau est de préférence un polycarbonate.

Le dispositif formant contre canal permet d'éviter la déformation du volume de séparation défini par le volume creux du canal lors d'un serrage puissant qui est nécessaire pour assurer l'étanchéité entre les trois éléments de montage définissant le canal de séparation. Ce dispositif formant contre canal ainsi que le dispositif formant canal de séparation permettent également d'obtenir un ensemble facilement interchangeable de manière à changer par exemple les matériaux, les dimensions, le boîtier, ou d'autres paramètres afin notamment de modifier les paramètres de séparation.

Dans le cadre des utilisations visées par la présente invention, il est particulièrement avantageux que le matériau du deuxième élément de montage soit compatible avec des substances biologiques, en particulier des cellules vivantes notamment transportables. Ces matériaux sont notamment ceux connus de l'homme de l'art pour de telles utilisations.

### Dispositif de serrage

Il est décrit ci-après un mode de serrage préféré selon l'invention. Ce mode de serrage est tout à fait utilisable dans d'autres dispositifs. Il permet notamment de répartir les forces de serrage de manière sensiblement égale sur la périphérie du canal. Ce dispositif permet également de réaliser un serrage uniforme du canal de séparation annulaire.

Selon un mode de réalisation, le dispositif selon la présente invention comprend au moins un organe de serrage disposé à l'intérieur de ladite cavité du boîtier, et ayant une hauteur sensiblement égale, de préférence identique, à la hauteur de ladite cavité du boîtier, pour venir prendre appui contre sensiblement la totalité de la surface apparente du troisième élément de montage.

Avantageusement, l'organe de serrage comprend au moins deux éléments de serrage distincts de section trapézoïdale complémentaire ayant une surface de contact jointive à plan incliné définie par le bord incliné de la section trapézoïdale.

De manière préférée, le premier élément de serrage, prévu pour prendre appui contre le troisième élément de séparation, présente une forme torique à section trapézoïdale, avantageusement découpée en plusieurs pièces distinctes.

De manière également préférée, le deuxième élément de serrage présente essentiellement une forme de disque dont le bord extérieur définit ledit plan incliné de la section trapézoïdale prévu pour coopérer avec le plan incliné de la section trapézoïdale du premier élément de serrage.

On comprend qu'il est avantageux que le bord droit du trapèze constitue la surface d'appui de serrage, contre le troisième élément de séparation.

### Dispositif entrée/sortie

Selon un premier mode de réalisation particulier, la présente invention met en oeuvre un dispositif d'entrée et/ou de sortie du liquide porteur dans le canal de séparation, permettant d'introduire le liquide porteur par la périphérie extérieure du bol de séparation, c'est-à-dire qu'un conduit d'entrée et/ou de sortie traverse le boîtier, le contre canal, et le premier élément de montage du canal. Il est tout à fait possible de mettre en oeuvre la présente invention dans un second mode de réalisation, dans lequel le dispositif d'entrée et/ou de sortie permet d'introduire le liquide porteur par l'intérieur du bol de séparation. Des dispositifs de ce type sont connus dans l'art antérieur. Dans ce deuxième mode de réalisation, il est avantageux d'aménager un orifice traversant au sein du dispositif de serrage pour faire passer le conduit d'entrée et/ou de sortie et permettre de faire entrer ou sortir du canal le liquide porteur en traversant le troisième élément de montage par un orifice aménager au sein de cet élément.

Selon le premier mode de réalisation qui est préféré, le premier élément de montage comprend au moins deux orifices traversants destinés à constituer respectivement un orifice d'entrée et un orifice de sortie de la solution de liquide à séparer dans ledit canal de séparation.

Selon un mode de réalisation particulier, le dispositif selon la présente invention comprend dans la masse du boîtier au moins deux logements traversants destinés à recevoir chacun au moins une pièce d'ajustement de joints d'étanchéité de circulation de l'entrée et de la sortie de ladite solution liquide, comprenant au moins un orifice de réception d'une vis de serrage elle-même pourvue d'un orifice traversant servant respectivement à l'entrée ou à la sortie de ladite solution liquide à l'orifice d'entrée ou de sortie du cinquième élément. La pièce d'ajustement est montée de manière mobile pour permettre un mouvement de translation de cette pièce le long de la paroi du boîtier. Un système de glissière, ou de rigole permet de donner à la pièce d'ajustement un degré de liberté suffisant.

Lesdits logements sont tout à fait indépendamment brevetables dans la mesure où ils peuvent être adaptés au boîtier servant de bol de séparation de manière à faciliter l'ajustement de l'entrée et de la sortie. Le positionnement des orifices d'entrée et de sortie du canal de séparation est notamment dépendant de la force ou pression de serrage.

Les logements traversants sont avantageusement situés à la périphérie extérieure du boîtier.

La présente invention a résolu ce problème technique en fournissant un système mobile d'alimentation en liquide à séparer, ce qui simplifie grandement les taches de montage du canal et du contre canal dans un boîtier servant de bol de séparation. Le problème d'ajustement de l'entrée et de la sortie se rencontre particulièrement lorsque la position des orifices d'entrée et de sortie du canal est repérée avant le serrage de l'ensemble ou lorsque le serrage appliqué à l'ensemble canal et contre canal n'est pas de force identique. Ceci permet également d'obtenir un degré de liberté quant à la longueur du canal de séparation. Ce système mobile permet avantageusement la mise en oeuvre d'un procédé de montage dans lequel les différents éléments formant respectivement le canal et le contre canal peuvent être mis en aveugle. Le procédé est décrit plus en détail dans la description détaillée de l'invention.

### Appareil de séparation

Selon un second aspect, la présente invention concerne un appareil de séparation comprenant un dispositif de séparation tel que décrit précédemment.

Les inventeurs ont constaté que les appareils de séparation de l'état de la technique ne permettent pas une procédure de montage et/ou des montages aisée par le manipulateur. En effet, le dispositif de séparation est monté sur un axe de rotation et est compris entre deux parties fixes assurant le maintien de l'axe de rotation en partie d'extrémité distale et en partie d'extrémité proximale.

Avantageusement, l'appareil de séparation selon l'invention est asymétrique, pour permettre un démontage rapide, et comprend une partie fixe unique destinée à supporter un axe de rotation, ladite partie fixe étant située entre un dispositif d'entraînement, comme un moteur, pour entraîner le dispositif de séparation en rotation autour de l'axe de rotation, et le dispositif de séparation. Le dispositif selon la présente invention peut être entraîné en rotation soit autour d'un axe de rotation sensiblement horizontal, soit autour d'un axe de rotation sensiblement vertical. Il est préféré d'utiliser un axe de rotation sensiblement horizontal, notamment pour la facilité de mise en oeuvre, en particulier de l'opération de montage et de démontage.

Avantageusement, l'appareil comprend sensiblement deux zones distinctes à savoir une première zone aisément accessible dite de séparation comprenant le dispositif de séparation, et une seconde zone dite d'entraînement comprenant le dispositif d'entraînement.

Cet aspect de l'invention est également indépendamment brevetable dans la mesure où le fait de réaliser un montage asymétrique et/ou de séparer physiquement la zone comprenant le dispositif de séparation et la zone comprenant le dispositif d'entraînement permet de sécuriser tout appareillage de centrifugation notamment quant à la partie d'entraînement, tout en gardant aisément accessible la partie de séparation. Ceci est particulièrement avantageux lorsque l'appareil est asymétrique et permet un montage/démontage aisé et très rapide du bol de séparation, en particulier du dispositif de séparation selon la présente invention.

Des difficultés techniques de réalisation d'un appareil de centrifugation asymétrique résident dans le fait que jusqu'à présent il était préférable de loger le dispositif de séparation entre deux parties fixes pour assurer une bonne stabilité lors de la rotation. D'autre part, les dispositifs antérieurs sont généralement soudés sur l'arbre de rotation de manière à ce que le dispositif soit stable et sécurisé lors de la rotation. Cependant les dispositifs de l'art antérieur ne permettent pas (ou difficilement) à l'homme du métier de modifier les caractéristiques du bol de séparation et/ou du canal de séparation.

Avantageusement, la seconde zone d'entraînement est située en dessous de la première zone. Ceci permet de garder accessible par l'avant de la partie haute, pour effectuer une manipulation du dispositif de séparation et de la partie basse, pour effectuer une intervention de maintenance sur le moyen d'entraînement.

Selon un autre aspect de la présente invention, le dispositif de séparation ou de l'appareil tel que décrit précédemment est utilisé pour la séparation de particules en suspension dans un liquide porteur, en particulier par centrifugation, de préférence par une technique de fractionnement flux force dénommée FFF, en particulier de cellules vivantes, en particulier de cellules vivantes d'origine humaines.

Avantageusement, selon un premier mode de réalisation les particules en suspension sont des colloïdes, par exemple comme le dioxyde de titane.

Avantageusement selon un second mode de réalisation particulièrement préféré, les particules en suspension sont les cellules vivantes, en particulier des cellules souches. Une telle séparation n'était pas possible jusqu'alors par les systèmes décrits dans l'art antérieur puisqu'il ne permettait pas une bonne reproductibilité de la séparation.

Par exemple, les cellules vivantes à séparer sont des cellules vivantes choisies parmi le groupe consistant en les globules rouges, les cellules souches aviaires, les cellules souches neurales, les cellules précurseurs dans les gliomes, les cellules précurseurs dans les neuroblastomes, les cellules gliales de lignées cellulaires. La présente invention permet également la séparation d'autres molécules biologiques en suspension, par exemple de protéines, telles que des anticorps, ou des acides aminés, tels que un ADN, un ARN, un virus. Les substances à séparer peuvent être avantageusement d'origine humaine.

Le dispositif selon la présente invention permet donc d'adapter la technique de FFF à la séparation des cellules biologiques vivantes, et notamment transplantables.

Le dispositif selon la présente invention permet d'identifier de nouvelles cellules, ce qui représente une avancée considérable dans les applications médicales humaines et animales, cosmétologiques et industrielles. Le dispositif selon la présente invention permet également de s'affranchir de l'absence et/ou de l'ignorance des marqueurs biologiques présents sur les cellules.

En particulier, il faut noter que le Pr. CARDOT et son équipe ont effectué de nombreuses publications sur l'application de la technique de FFF, ce qui permet de connaître l'ensemble des utilisations du dispositif selon la présente invention. En utilisant le dispositif selon la présente invention dans les applications connues de l'homme du métier en FFF, il est possible d'obtenir des résultats tout à fait inattendus, notamment de par la reproductibilité des séparations, ainsi que par la durée réduite de la séparation.

L'invention sera décrite plus en détail en référence aux figures.

D'autres buts, caractéristiques et avantages de l'invention apparaîtront clairement à l'homme de l'art suite à la lecture de la description explicative qui est faite en référence aux figures qui sont données seulement à titre d'illustration et qui ne sauraient en aucune façon limiter la portée de l'invention.

Les figures font partie intégrante de la présente invention et toute caractéristique apparaissant nouvelle par rapport à un état de la technique antérieure quelconque à partir de la description prise dans son ensemble, incluant les figures, fait partie intégrante de l'invention dans sa fonction et dans sa généralité.

**Description des figures.**
- La figure 1 représente une vue perspective éclatée de l'ensemble des éléments du dispositif de séparation selon la présente invention, incluant le dispositif de serrage.
- La figure 2 représente une coupe transversale du dispositif selon la présente invention incluant du dispositif de serrage monté en position d'utilisation.
- La figure 3 représente une vue perspective éclatée du canal et du contre canal.
- La figure 4 représente une vue de dessus du dispositif de séparation.
- Les figures 5a et 5b représentent respectivement une section AA et une section BB du boîtier présentant des éléments de logements selon la présente invention indépendamment brevetables.
- La figure 6 représente un schéma d'un appareil de séparation asymétrique, comprenant le dispositif de séparation selon la présente invention, indépendamment brevetable.
- La figure 7 représente une section longitudinale d'un appareil de séparation asymétrique, comprenant le dispositif de séparation selon la présente invention.
- La figure 8 représente l'évolution de la détection de billes de latex en fonction du temps pour permettre le contrôle d'un serrage correct de l'ensemble canal-contre canal.
- La figure 9 illustre la reproductibilité des temps de rétention, par exemple des billes de latex.

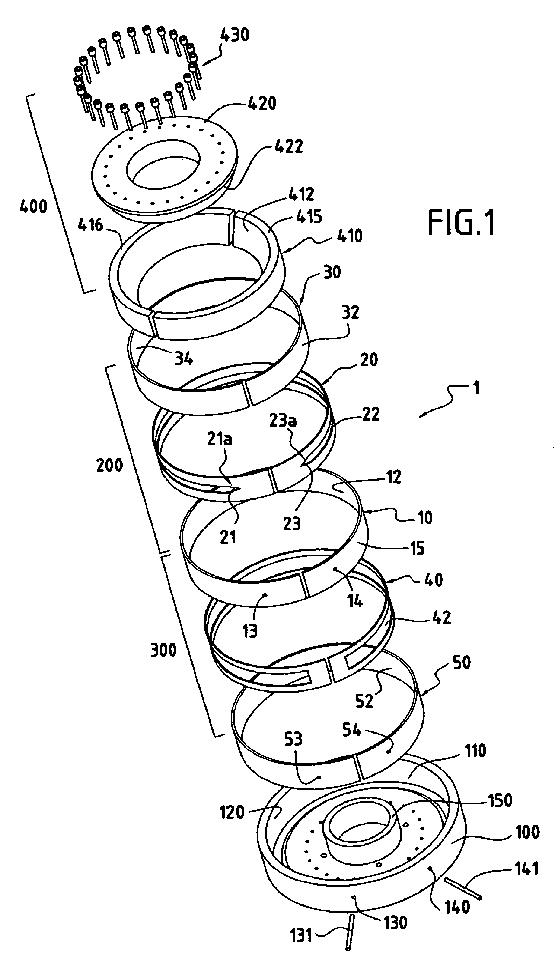

La figure 1 montre en particulier un exemple de dispositif 1 de séparation de solutions contenant des substances en suspension dans un liquide porteur, notamment dans le cadre d'une centrifugation, comprenant un boîtier 100 comprenant une cavité 110 définissant une surface interne 120 sensiblement cylindrique d'une hauteur prédéterminée, à savoir généralement entre 1 et 15 cm bien que cela ne soit pas limitatif.

### boîtier :

Le boîtier 100 comprend un moyen de positionnement 150, comme un orifice central traversant pour le passage ou la fixation du boîtier 100 sur un arbre 702 d'entraînement en rotation dudit boîtier 100 et au moins un premier canal de séparation 200. Avantageusement le moyen de positionnement 150 est adapté à recevoir un dispositif formant joint tournant, permettant l'entrée et/ou la sortie du liquide porteur par des conduits d'entrée 131 et/ou de sortie 141.

### canal de séparation :

Le premier canal de séparation 200 proprement dit de forme sensiblement cylindrique annulaire à section droite sensiblement rectangulaire, formé par la combinaison de trois éléments de montage d'une dimension suffisante pour, en position montée, recouvrir sensiblement complètement ladite surface interne 120 sensiblement cylindrique de ladite cavité, à savoir un premier élément de montage 10 dont une partie de paroi 12 définit au moins une première paroi latérale dudit canal de séparation 200, un deuxième élément de montage 20 comportant au moins un évidement 22 définissant une deuxième paroi latérale du dit canal de séparation 200 et la dimension dudit canal de séparation 200, et un troisième élément de montage 30 venant se positionner contre le deuxième élément 20, définissant une troisième paroi latérale 32 et complétant ledit canal de séparation 200.
Ce dispositif est caractérisé selon l'invention en ce qu'il comprend au moins un deuxième canal 300 dénommé contre canal, disposé en regard du premier canal de séparation 200, entre le premier élément de montage 10 et ladite paroi interne 120 de la cavité 110 du boîtier 100.

### Contre canal :

Le contre canal 300 est formé par la combinaison :
- d'un quatrième élément de montage 40 disposé entre le premier élément de montage 10 et la paroi interne 120 du boîtier 100 et comprenant un deuxième évidement 42 au moins aussi grand que le premier évidement 22, ledit deuxième évidement 42 étant disposé, à l'état monté, en regard du premier évidement 22, et
- d'un cinquième élément de montage 50 disposé contre la paroi interne 120 de ladite cavité 110 du boîtier 100. Le dispositif comprend au moins un organe de serrage 400 disposé à l'intérieur de ladite cavité 110 du boîtier 100 et ayant une hauteur sensiblement égale, de préférence identique, à la hauteur de ladite cavité 110 du boîtier 100, pour venir prendre appui contre sensiblement la totalité de la surface apparente 34 du troisième élément de montage.

### Organe de serrage :

Selon un mode de réalisation avantageux, l'organe de serrage 400 comprend au moins deux éléments de serrage distincts (410,420) de section trapézoïdale complémentaire ayant une surface de contact jointive à plan incliné.

Avantageusement, le premier élément de serrage 410, prévu pour prendre appui contre le troisième élément de séparation 30, présente une forme cylindrique creuse à section trapézoïdale, découpée en plusieurs pièces distinctes, par exemple en deux pièces distinctes (415,416), voire trois pièces distinctes de manière à répartir au mieux possible la force de pression de serrage. On comprend que le bord extérieur vertical 414 du premier élément de serrage 410 constitue la surface d'appui de serrage contre la surface apparente 34 du troisième élément de montage 30.

En particulier, le deuxième élément de serrage 420 présente essentiellement une forme de disque dont le bord extérieur 422 définit ledit plan incliné de la section trapézoïdale, prévu pour coopérer avec le plan incliné de la section trapézoïdale du premier élément de serrage 410, formé par le bord intérieur 412. Les deux éléments de serrages (410,420) maintenus solidairement sur le boîtier 100 par des moyens de maintien 430, tel que des vis connues de l'homme du métier pour assurer une répartition égale des forces exercées lors du serrage d'un élément de serrage, tel que le second élément de serrage 420. Ceci est tout à fait avantageux de manière à ne pas déformer l'ensemble canal de séparation 200, contre canal 300.

### Orifices traversants :

Avantageusement, le premier élément de montage 10 comprend au moins deux orifices traversants 13, 14 destinés à constituer respectivement un orifice d'entrée 13 et un orifice de sortie 14 de la solution de liquide à séparer dans le dit canal de séparation 200. Le cinquième élément de montage 50 comporte également les mêmes orifices 53 et 54. Le boîtier 100 comporte également deux trous traversants (130,140) permettant d'assurer l'entrée et la sortie de la solution de liquide à séparer dans le dit canal de séparation 200. Les orifices traversants (13, 14, 53, 54, 130, et 140) permet introduction de moyens d'entrée (131) et de sortie (141) du liquide porteur comprenant des substances à séparer. Ces moyens sont par exemple des tubes de chromatographie, comme des tubes pour HPLC. Le montage de ces tubes s'effectue de manière hermétique pour que le liquide porteur ainsi que les substances à séparer qui doivent passer dans le canal de séparation ne se retrouvent pas dans l'évidement 42 du contre canal.

Le boîtier 100 est par exemple d'un diamètre interne efficace de la cavité 110 de séparation de 30 cm. Les diamètres des boîtiers 100 seront généralement compris entre 5 et 50 cm, de préférence entre 8 et 15 cm et varieront en fonction de la séparation désirée. Plus la masse du boîtier est faible plus les vitesses de rotation potentielles sont élevées.

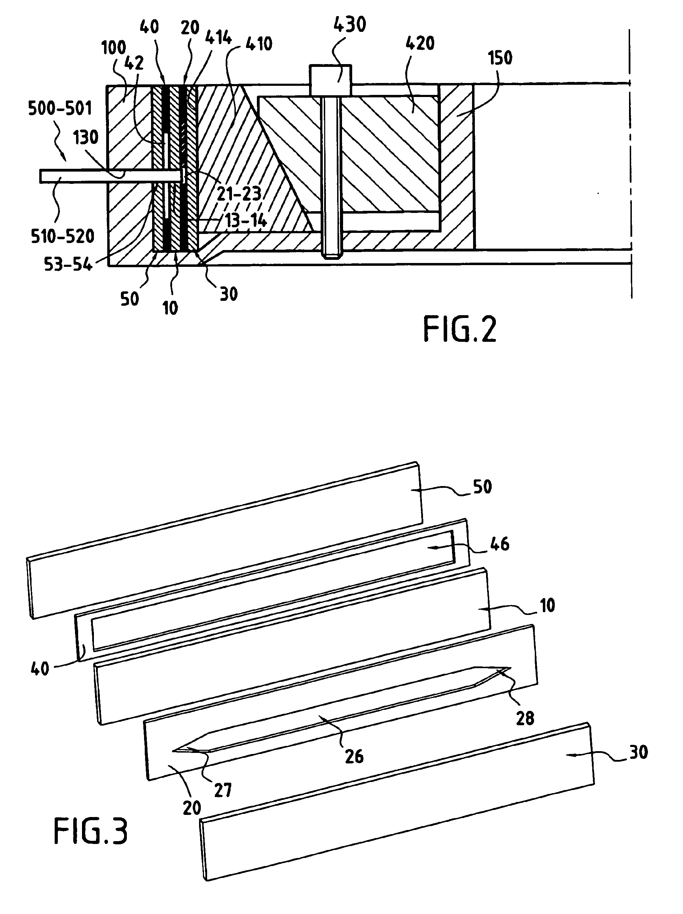

La figure 2 montre une section transversale du dispositif selon la figure 1 en position maintenue serrée de fonctionnement. On distingue notamment le fait que l'on peut introduire un élément 500 servant à l'entrée 510 ou un élément 501 servant à la sortie 520 de la solution de liquide à séparer, dans l'orifice d'entrée 130 ou de sortie 140. L'élément 500, 501 est positionné avantageusement en regard de l'extrémité biseautée de l'évidement définissant le canal de séparation 200, en étant sensiblement tangent à la surface interne 12 du premier élément 10. Les éléments 500,501 pénètrent dans le cinquième élément de montage 50 par l'intermédiaire des orifices traversants 53, 54 et traversent le contre canal dans la partie évidée 46.

La figure 3 représente une vue en perspective éclatée de l'ensemble canal de séparation 200, contre canal 300. Les éléments de montage 10,30,50 sont formés par des bandes ou feuilles de forme extérieure sensiblement parallélépipédique la section sensiblement rectangulaire et ont généralement une dimension d'environ : largeur =0.5 à 15 cm, de préférence de 0,7 à 2 cm, longueur = 10 cm à 1 m, de préférence de 20 cm à 80 cm, épaisseur =0.010 à 20mm, de préférence de 0.050 à 0.200 mm, encore de préférence de 0.070 à 0.0120 mm.

Le deuxième élément de montage 20 est sensiblement parallélépipédique et comprend un évidement traversant 26 sensiblement parallélépipédique sur la majorité de sa dimension mais comporte également un biseau aux parties distales 27 et 28. Le quatrième élément de montage 40 qui est sensiblement parallélépipédique comprend également un évidement sensiblement parallélépipédique 46. L'évidement 46 a une dimension de préférence légèrement supérieure à celle de l'évidement 26, notamment dans la direction correspondant en position montée à la paroi cylindrique. L'évidement 46 a généralement pour dimension :
largeur =0.5 à 15 cm, de préférence de 0,5 à 2 cm, longueur = 10 centimètres à 1 m, épaisseur =0.010 à 20mm, de préférence de 0.050 à 0.200 mm, encore de préférence de 0.070 à 0.0120 mm, et l'évidement 26 a généralement pour dimension : largeur =0.5 à 15 cm, de préférence de 0,5 à 2 cm, longueur = 10 centimètres à 1 m, épaisseur =0.010 à 20mm, de préférence de 0.050 à 0.200 mm, encore de préférence de 0.070 à 0.0120 mm. Le biseau formant l'extrémité du canal de séparation est généralement d'une longueur de 1 à 7 cm.

Les éléments de montage sont positionnés pour avoir une forme annulaire en contact avec la surface interne du boîtier 100 selon la figure 1. La procédure de montage est la suivante, faite en référence à la figure 1:

### a) Première étage de montage pour le repérage de la longueur des évidements réalisés

La plus grande surface du cinquième élément de montage 50 est positionnée en contact avec la surface interne 120 du boîtier 100. Le quatrième élément de montage 40 (ne comprenant pas encore l'évidement 42) est positionné de manière annulaire contre la surface interne 52 du cinquième élément de montage 50. Ensuite est positionné de manière annulaire le premier élément de montage 10 en contact avec le quatrième élément de montage 40. Le deuxième élément de montage 20 (ne comprenant pas encore l'évidement 22) est monté de manière annulaire en contact contre la surface interne 12 du premier élément de montage 10. Enfin le troisième élément 30 est positionné de manière annulaire pour placer la surface 32 en contact avec le second élément de montage 20. Ces étapes sont effectuées en aveugle, c'est-à-dire sans précaution particulière quant à la position des différents éléments, mis à part le deuxième et le quatrième élément de montage (20,40) qui doivent être positionné de manière à ce que l'extrémité de la bande (20,40) parallélépipédique soit disposée entre l'entrée 130 la sortie 140 du boîtier 100.

### b) Deuxième étape de serrage.

Le serrage est effectué de manière très progressive pour obtenir par exemple une intensité de serrage de l'ordre de 10N. On identifie par un moyen de repérage le positionnement de l'orifice d'entrée 130 et de l'orifice de sortie 140 sur l'ensemble des éléments de montage 10, 20, 30, et 40.

### c) Troisième étape de démontage et de découpe des évidements.

On retire l'ensemble des éléments de montage 10, 20, 30, 40, et 50. On réalise avantageusement la découpe du deuxième élément de montage 20 et du quatrième élément de montage 40 de manière à définir l'évidement 22 du deuxième élément de montage et l'évidement 42 du quatrième élément de montage. L'évidement 42 du quatrième élément de montage est d'une longueur légèrement supérieure à l'évidement 22 du deuxième élément de montage. L'évidement 22 du deuxième élément de montage comprend avantageusement aux parties d'extrémité proximale 21 et distale 23 un biseau 21a, 23a dont l'extrémité correspond au repérage du positionnement de l'orifice d'entrée 130 et de l'orifice de sortie 140. De par l'évidement 42 du quatrième élément de montage 40 le moyen de repérage de l'orifice d'entrée 130 et de l'orifice de sortie 140 ne doit plus être apparent sur le quatrième élément de montage 40.

### d) Quatrième étape de montage après découpe des évidements.

On procède à l'identique de la première étape de montage, c'est-à-dire au positionnement au sein du boîtier 100 des éléments de montage 10, 20, 30, 40, et 50.

### e) Cinquième étape de serrage.

Ensuite le premier élément de serrage 410 est placé entre le moyen de positionnement 150 du boîtier 100 sur un arbre de rotation et le troisième élément de montage 30. Le deuxième élément de serrage 420 et placé ensuite contre le premier élément de serrage 410 et le moyen de positionnement 150. On procède ensuite à la solidarisation du second élément de serrage 420 par les moyens de maintien 430 sur le boîtier 100.

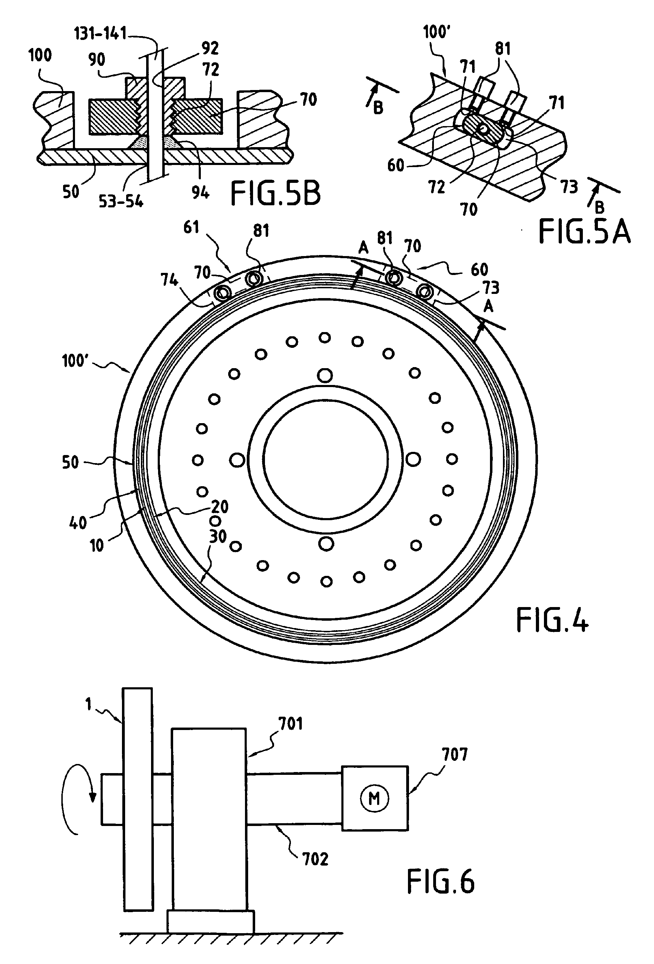

On procède ensuite à l'introduction des moyens d'entrée 131 et de sortie 141 du liquide porteur comprenant les substances séparées, au sein des orifices d'entrée 130 et de sortie 140 du boîtier 100. Ces moyens d'entrée 131 et de sortie 140 sont positionnés de manière tangente à la surface interne 12 du premier élément de montage 10 et doivent être étanches respectivement entre leur bord extérieur et l'orifice traversant d'entrée 13 ou de sortie 14. Cette position peut être légèrement différente de manière à faire varier la position d'introduction du liquide porteur comprenant les substances à séparer au sein du canal de séparation 200. Le positionnement des moyens d'entrée 130 et de sortie 140 au sein du boîtier 100 est assuré par un orifice d'entrée 73 et un orifice PCT de sortie 74, de préférence par l'intermédiaire de l'élément mobile 70 (figure 5) comprenant un orifice traversant 72. L'élément mobile 70 est maintenu en position par un élément de positionnement 81, par exemple une vis (en position vissée), par l'intermédiaire de l'orifice de positionnement 71.

Avantageusement, le deuxième élément de montage 20 est formé à partir d'une bande ou feuille essentiellement plane dans laquelle l'évidement précité est formé par découpe avec des bords d'extrémités latéraux 21, 23 biseautés 21a,23a.

La figure 4 représente une vue de dessus des éléments formant le dispositif de séparation 1 selon la présente invention sans les éléments de serrage. On peut distinguer le boîtier 100', le premier élément de montage 10, le second élément de montage 20, le troisième élément de montage 30, le quatrième élément de montage 40 et le cinquième élément de montage 50. Le boîtier 100' est indépendamment brevetable de par le moyen 60 (logement traversant décrits ci-après). Ce montage est notamment avantageux si l'entrée et/ou la sortie du liquide porteur s'effectue par la périphérie extérieure du bol de séparation, c'est-à-dire comme indiqué sur la figure 1.

### Logement traversant du boîtier

La figure 5a représente une coupe AA (selon un axe parallèle à l'axe du cylindre formé par le boîtier) du boîtier 100' indépendamment brevetable selon la présente invention. Le boîtier 100' comprend au moins deux logements traversants 60,61 destinés à recevoir chacun au moins une pièce d'ajustement 70 de joints d'étanchéité de circulation de l'entrée et de la sortie de ladite solution liquide, comprenant au moins un orifice traversant de réception 72 d'une vis de serrage 90 elle-même pourvue d'un orifice traversant servant respectivement à l'entrée ou à la sortie de ladite solution liquide à l'orifice d'entrée 13 ou de sortie 14 du premier élément 10. La pièce d'ajustement 70 est maintenu en position par au moins un élément de positionnement 81, tel qu'une vis, par l'intermédiaire d'au moins un orifice de positionnement 71.

La figure 5b représente une coupe BB (selon un axe perpendiculaire à l'axe formé par le cylindre du boîtier) du logement traversant 60,61. La vis de serrage 90 destinée à être logée dans l'orifice traversant de réception 72 comporte un orifice 92 permettant l'introduction d'un conduit d'entrée 131 ou de sortie 141. L'étanchéité est assurée au niveau de l'orifice d'entrée 53 ou de sortie 54 du cinquième élément de montage 50 par un moyen d'étanchéité 94, de préférence un joint conique. Le moyen d'étanchéité 94 est de préférence en contact avec la paroi extérieure du cinquième élément 50 et comprend un orifice destiné à recevoir le conduit d'entrée 131 ou de sortie 141. La bonne étanchéité est assurée par la pression exercée par la vis de serrage 90 sur le moyen d'étanchéité 94.

### Montage asymétrique du dispositif de séparation

La figure 6 représente une vue schématique de la position du dispositif de séparation 1 monté de manière asymétrique. Le dispositif de séparation 1 est positionné sur l'arbre d'entraînement 702 de rotation. La partie fixe 701 assurant le maintien de l'arbre de rotation 702 est uniquement présent entre le dispositif de séparation 1 et le moyen d'entraînement 707 de l'arbre 702.

### Appareil de séparation

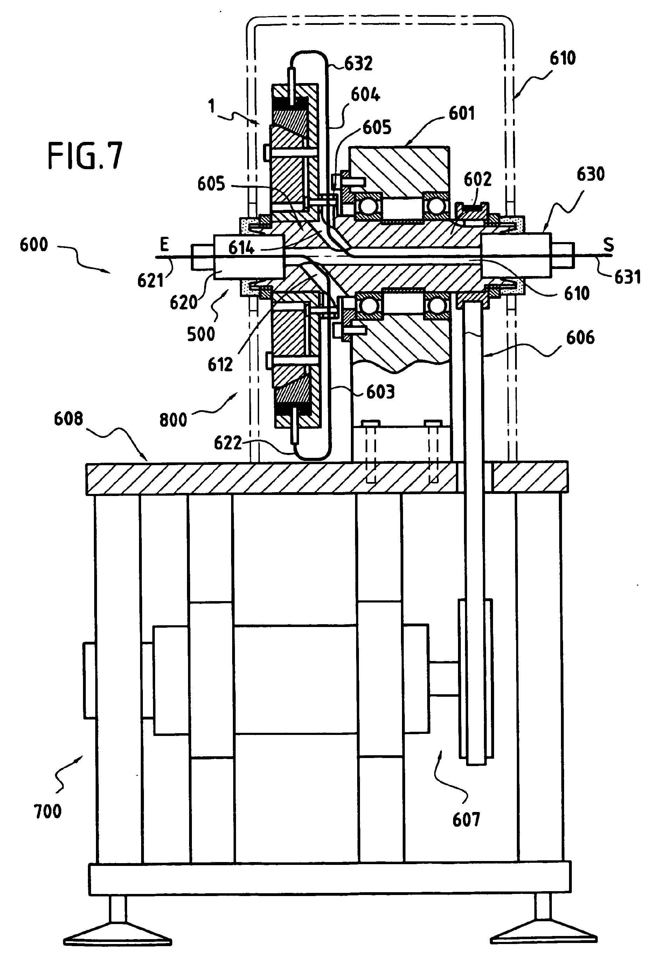

La figure 7 représente une section longitudinale de l'appareil de séparation asymétrique 600 comprenant un dispositif de séparation 1, selon la présente invention. Ce dispositif laisse apparaître une partie fixe 601 comprenant un évidement destiné à recevoir un arbre de rotation 602. L'arbre de rotation 602 comprend également un évidement permettant le passage de moyens d'entrée 603 et de sortie 604, tels que les tubes d'entrée et de sortie du liquide porteur comprenant les substances à séparer. Ces tubes sont de préférence les tubes souples utilisés habituellement dans le domaine de la chimie analytique pour l'entrée et la sortie de liquide porteur comprenant des substances à séparer, et sont par exemple des tubes souples utilisés pour la séparation par HPLC, d'un diamètre de conduit interne par exemple d'environ 163 µm. Le montage de ces conduits d'entrée et de sortie permet de ne pas les emmêler lors de la rotation. L'évidement 610 de l'arbre de rotation 602 est de préférence traversant selon l'axe de rotation. L'évidement 610 est également de forme cylindrique de préférence. L'arbre de rotation 602 comprend avantageusement au moins un évidement radial 612,614 s'étendant de l'évidement 610 à la périphérie de l'axe de rotation 602, permettant de faire passer les conduits d'entrée 603 de sortie 604 d'une position sensiblement parallèle à l'axe de rotation vers l'extérieur de l'arbre de rotation 602 en sortant de manière radiale du corps de l'arbre de rotation pour s'insérer sur l'extérieur du dispositif de séparation 1. L'axe de rotation 602 comprend un moyen de solidarisation 605 du dispositif de séparation 1 selon la présente invention. Ce moyen de solidarisation 605 est avantageusement une protubérance cylindrique de l'axe de rotation 602 comprenant par exemple des pas de vis pour y solidariser le dispositif de séparation 1 par exemple par des vis ou permettant la mise en place d'un système boulon-écrou. Ces moyens sont avantageusement faciles à monter et/ou démonter de manière à permettre à l'utilisateur de monter et/ou démonter aisément le dispositif de séparation 1 selon la présente invention de l'axe de rotation 602. En particulier l'évidement 612,614 de l'arbre de rotation 602 permettant l'entrée ou la sortie de manière radiale des conduits d'entrée 603 ou de sortie 604 est compris dans le moyen de solidarisation 605. Avantageusement, l'arbre de rotation 602 permet de recevoir au moins un dispositif formant joint tournant 620,630. Le dispositif formant joint tournant 620,630 permet une jonction étanche entre un conduit d'entrée fixe 621 et un conduit d'entrée tournant 622 ou entre un conduit de sortie fixe 631 et un conduit de sortie tournant 632. L'axe de rotation est avantageusement entraîné par un moyen de transfert d'un mouvement de rotation 606, qui est par exemple une courroie. Le moyen de transfert 606 est relié à un moyen de rotation 607, tel qu'un moteur.

Selon un mode de réalisation particulier permettant de sécuriser l'appareil de séparation, l'axe de rotation 602 sur lequel est monté le dispositif de séparation 1 selon la présente invention est compris dans un boîtier de protection 610.

Selon un mode de réalisation particulier, le moyen de rotation 607 est séparé physiquement de la zone dite de séparation 800 comprenant le dispositif de séparation 1, l'axe de rotation 602 et la partie fixe 601. De préférence le moyen de rotation est situé en dessous de l'appareil de séparation 600. De manière encore préférée, le moyen de rotation 607 est situé sous une surface horizontale plane 608 et l'appareil de séparation 600 est disposée au-dessus de la surface 608. Ce montage permet une intervention facile des manipulateurs sur la partie dite de séparation comprenant le dispositif de séparation 1 et la partie mécanique d'entraînement 700 comprenant le moyen d'entraînement 607 est accessible pour la maintenance sans risque d'endommagement de la partie dite de séparation.

D'autres buts, caractéristiques et avantages de l'invention apparaîtront clairement à l'homme de l'art suite à la lecture de la description explicative qui est faite en référence à des exemples qui sont donnés seulement à titre d'illustration et qui ne sauraient en aucune façon limiter la portée de l'invention.

Les exemples font partie intégrante de la présente invention et toute caractéristique apparaissant nouvelle par rapport à un état de la technique antérieure quelconque à partir de la description prise dans son ensemble, incluant les exemples, fait partie intégrante de l'invention dans sa fonction et dans sa généralité.

Ainsi, chaque exemple a une portée générale.

D'autre part, dans les exemples, tous les pourcentages sont donnés en poids, sauf indication contraire, et la température est la température ambiante ou est exprimée en degré Celsius sauf indication contraire, et la pression est la pression atmosphérique, sauf indication contraire.

### EXEMPLES

### Exemple 1 : Exemple d'une procédure de contrôle du volume du canal de séparation du dispositif selon la présente invention:

La procédure suivante a été effectuée pour contrôler le volume du canal de séparation, notamment pour savoir si le canal de séparation à une forme géométrique annulaire de section rectangulaire n'ayant pas subi de déformation lors du serrage des éléments constituant le canal et contre canal.
Une fois que les dimensions du canal de séparation ont été choisies par découpe à partir d'une feuille de mylar et que les dimensions du contre canal l'ont été à partir d'une feuille de mylar, ces deux feuilles sont insérées comme indiqué en référence aux figures 1 à 7 pour constituer le second et le quatrième élément de montage contre des feuilles de polystyrène qui constituent les premier, troisième, et cinquième éléments de montage.
Le volume du canal de séparation est contrôlé par injection d'acétone via un injecteur de HPLC.
Lorsque le canal de séparation est correctement fixé, notamment sans déformation, le volume d'élution doit correspondre au volume mort géométrique du canal et le profil typique doit être monomodal de type Gaussien. Si besoin est le serrage doit être repris.

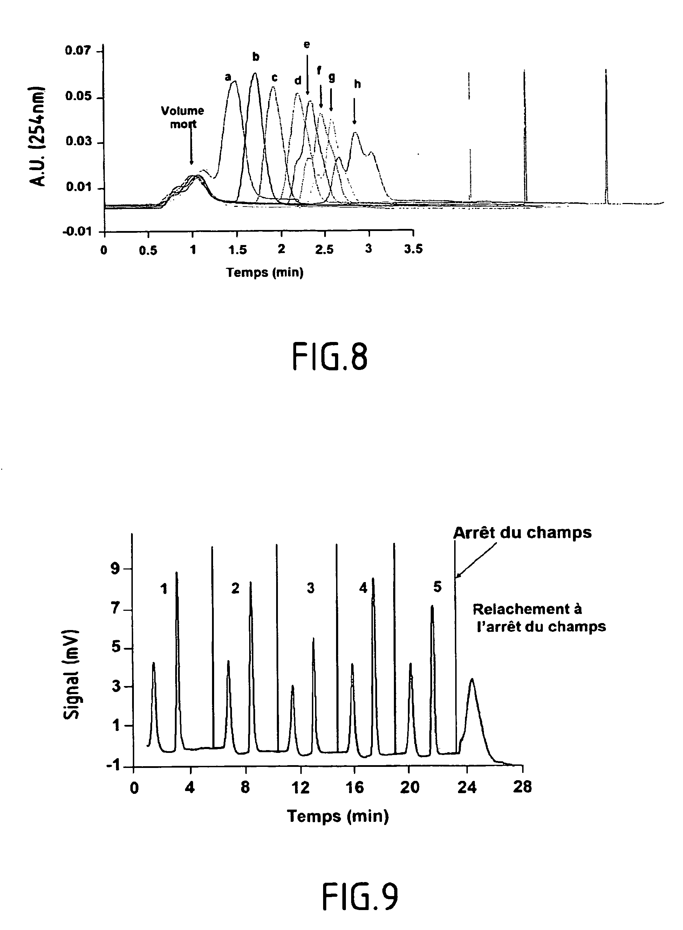

Des billes de latex monodisperses sont utilisées pour le contrôle du volume mort ayant un diamètre de particules de 7 µm, par exemple lorsque le canal de séparation a une épaisseur de 80 µm. Les billes sont éluées en utilisant le mode « steric-hyperlayer ». Lorsque les billes de latex monodisperses sont éluées dans un canal qui n'est pas correctement serré, le profil d'élution apparaît monomodal pour les ratios de rétention élevés (figure 8, a, b, c,d). Lorsque le champ externe est augmenté en intensité (augmentation de la vitesse de rotation) le profil d'élution est complètement perturbé et apparaît multimodal (figure 8, e, f, g, h). De ce fait on effectue un va-et-vient dans la procédure de serrage pour amener au profil d'élution désiré. On peut remarquer que le volume mort du liquide porteur comprenant le tensioactif a un profil gaussien monomodal remarquable. Lorsque les volumes morts mesurés sont en accord avec le volume théorique d'un canal de géométrie annulaire de section rectangulaire, il est considéré que le canal est correctement serré.
Le système selon la présente invention permet d'obtenir une bonne reproductibilité des temps de rétention et de l'intensité des pics.
Par exemple lorsque le canal de séparation a une longueur de 78,4 cm, l'élution des billes de latex d'un diamètre de 7µm est effectuée en moins de 4 minutes avec un ratio de rétention de 0,5 comme le montre la figure 9 où il a été effectué 5 injections répétées de l'éluant contenant les billes de latex.

Par exemple si les premiers, troisième, et cinquième éléments de montage sont réalisés en polymère de polycarbonate ayant une épaisseur de 2,0 mm, si le second et le quatrième élément de montage sont réalisés dans une feuille de mylar ayant une épaisseur de 250 µm présentant respectivement un évidement ayant les dimensions : 78,5x1x0,0250 cm et 78,5x1 x0.0275 cm le volume mort associé est de 2,11 ± 0,09 mL mesuré avec une solution aqueuse à 0,1 % (p/p.) de benzoate de sodium.

### Exemple 2 : tri cellulaire de cellules grâce au dispositif selon la présente invention :

Il est possible de séparer des cellules dans les conditions suivantes :
le canal de séparation est réalisé par deux bandes de polystyrène de dimensions 870 x 30 x 2 mm, séparées par une bande de Mylar® dans laquelle le canal a été découpé. Les dimensions du canal étaient 685 x 10 x 0.125 mm avec des extrémités en forme de V de 70 mm.
Le volume mort (volume du canal + connexion tubulaire + système d'injection + système de détection) était de 960 ± 5 µL. Le volume mort a été calculé après l'injection composé non retenu (eau avec 0,1g/L d'acide benzoïque) et le temps de rétention a été déterminé par détection UV à 254 nm (longueur d'onde est adaptée en fonction des cellules à détecter).
Les tubes d'entrée et de sortie de 0,254 mm en ID PEEK® étaient directement affleurant à la paroi d'accumulation. Les bandes de polystyrènes et de mylar ont été fixées dans le boîtier de centrifugation de la manière décrite en référence aux figures. La distance axe de rotation-canal a été mesurée à 13,8 cm. Le champ de sédimentation est exprimé en unités de gravité, 1g = 980 cm/s², calculé en utilisant la vitesse de rotation avec le rayon décrit ci-dessus. La phase mobile stérile était pompée avec une pompe chromatographique classique utilisée pour la HPLC.
L'ensemble était contrôlé par une unité pilote connu de l'homme du métier pour permettre le contrôle de la vitesse de rotation centrifuge.
Les échantillons ont été injectés après montage de l'ensemble du dispositif de séparation et après sa mise en rotation. Le champ gravitationnel extérieur était compris entre 30 et 60g. Le débit de la phase mobile et de 0,4 à 1,0 mL par minute. Le volume d'injection était de 100 µL de cellules injectées à un débit de 0,6 mL/min. La phase mobile était une phase stérile de PBS à pH 7,4 supplémentée à 1 % de pénicilline/streptomycine et 1 % de fungizone. Le champ extérieur multi-gravitationnel était de 40,00 ± 0,03g et le spectrophotomètre de détection réglé à une longueur d'onde de 254 nm.
Les fractions des cellules ont été collectées. Cela a permis de caractériser les cellules éluées par analyse immunocytochimique selon les méthodes classiques connues de l'homme du métier.

Cette méthode de tri par FFF a permis d'individualiser deux populations de cellules dont les propriétés fonctionnelles (prolifération et formation de réseau) et d'expression sont différentes. Ceci ouvre donc des perspectives extrêmement intéressantes pour étudier les propriétés de ces cellules et pour les utiliser.

### Exemple 3 : Autre exemple de séparation une suspension d'une lignée cellulaire grâce aux dispositif selon la présente invention :

Les conditions d'élution étaient celles de l'exemple 2 à l'exception de celles suivantes :
dimensions du canal : 780x10x0.125 mm;
dimensions du contre canal : 780x10x0.135 mm
injection de 100 microlitres de cellules (10⁷ cellules /mL) ;
débit : 0.60mL/min ;
phase mobile : PBS stérile, pH = 7,4 avec 0,1 % (p/v) BSA ;
champ extérieur multi-gravitationnel = 40,00 g ± 0,01 g ;
détection par spectrophotométrie à λ = 254 nm.

Ainsi il a été possible d'obtenir différentes fractions d'une lignée cellulaire, ce qui a permis de séparer des cellules présentes à différents stades de maturation.

## Revendications

1. Dispositif de séparation (1) de solutions contenant des substances en suspension dans un liquide porteur, notamment dans le cadre d'une centrifugation, comprenant un boîtier (100) comprenant une cavité (110) définissant une surface interne (120) sensiblement cylindrique d'une hauteur prédéterminée, et au moins un premier canal de séparation (200) proprement dit de forme sensiblement cylindrique annulaire à section droite sensiblement rectangulaire, formé par la combinaison de trois éléments de montage d'une dimension suffisante pour, en position montée, recouvrir sensiblement complètement ladite surface interne (120) sensiblement cylindrique de ladite cavité (110), à savoir un premier élément de montage (10) dont une partie de paroi définit au moins une première paroi latérale dudit canal de séparation, un deuxième élément de montage (20) comportant au moins un évidement (22) définissant une deuxième paroi latérale dudit canal de séparation (200) et la dimension dudit canal de séparation (200), et un troisième élément de montage (30) venant se positionner contre le deuxième élément, définissant une troisième paroi latérale et complétant ledit canal de séparation (200), **caractérisé en ce qu'**il comprend au moins un deuxième canal dénommé contre canal (300), disposé en regard du premier canal de séparation (200), entre le premier élément de montage (10) et ladite paroi interne (120) de la cavité (110) du boîtier (100).

2. Dispositif selon la revendication 1, **caractérisé en ce que** l'épaisseur du deuxième élément de montage (20) définit l'épaisseur du premier canal de séparation (200) ; et **en ce que** l'épaisseur du contre canal (300) est sensiblement identique à l'épaisseur du premier canal de séparation (200).

3. Dispositif selon la revendication 1 ou 2, **caractérisé en ce que** la section transversale du contre canal (300) est supérieure à la section transversale du premier canal de séparation (200).

4. Dispositif selon l'une des revendications précédentes, **caractérisé en ce que** le deuxième élément de montage (20) comprenant ledit évidement (22) est réalisé en un matériau ayant des propriétés mécaniques différentes du matériau du premier élément de montage (10) et/ou du troisième élément de montage (30).

5. Dispositif selon l'une des revendications précédentes, **caractérisé en ce que** le deuxième élément de montage (20) est réalisé en un matériau ayant des propriétés mécaniques suffisantes pour être essentiellement sans fluage, notamment sous l'effet d'une pression de serrage.

6. Dispositif selon l'une des revendications précédentes, **caractérisé en ce que** le contre canal est formé par la combinaison d'un quatrième élément de montage 40 disposé entre le premier élément de montage (10) et la paroi interne (120) du boîtier (100) et comprenant un deuxième évidement 42 au moins aussi grand que le premier évidement (22), ledit deuxième évidement 42 étant disposé, à l'état monté, en regard du premier évidement, et un cinquième élément de montage (50) disposé contre la paroi interne (120) de ladite cavité (110) du boîtier (100).

7. Dispositif selon l'une des revendications précédentes, **caractérisé en ce que** le quatrième élément de montage (40) est réalisé en un matériau ayant des propriétés mécaniques similaires ou sensiblement identiques au matériau du deuxième élément de montage (20).

8. Dispositif selon l'une des revendications précédentes, **caractérisé en ce que** le matériau du deuxième élément de montage (20) est compatible avec des substances biologiques, en particulier des cellules vivantes notamment transportables, de préférence l'ensemble des éléments de montage (10,20,30,40,50) sont compatibles avec des substances biologiques, en particulier avec des cellules vivantes notamment transportables.

9. Dispositif selon l'une des revendications précédentes, **caractérisé en ce que** le matériau du deuxième élément de montage (20) est réalisé au moins en partie, ou de préférence totalement, en un matériau stérilisable et dont la surface peut être traitée pour limiter l'adsorption, en particulier une matière plastique choisie parmi le groupe consistant d'une feuille de plastique métallisée telle que le mylar, un polycarbonate, ou un métal ou alliage d' au moins un métal, en particulier un métal biocompatible tel que l'aluminium, un métal noble inoxydable.

10. Dispositif selon l'une des revendications précédentes, **caractérisé en ce qu'**il comprend au moins un organe de serrage (400) disposé à l'intérieur de ladite cavité (110) du boîtier (100), et ayant une hauteur sensiblement égale, de préférence identique, à la hauteur de ladite cavité (110) du boîtier (100), pour venir prendre appui contre sensiblement la totalité de la surface apparente du troisième élément de montage (30).

11. Dispositif selon l'une des revendications précédentes, **caractérisé en ce que** l'organe de serrage (400) comprend au moins deux éléments de serrage (410, 420) distincts de section trapézoïdale complémentaire ayant une surface de contact jointive (422,412) à plan incliné définie par le bord incliné du trapèze.

12. Dispositif selon l'une des revendications précédentes, **caractérisé en ce que** le premier élément de serrage (410), prévu pour prendre appui contre le troisième élément de séparation (30), présente une forme cylindrique creuse à section trapézoïdale (412), avantageusement découpée en plusieurs pièces distinctes (415,416).

13. Dispositif selon l'une des revendications précédentes, **caractérisé en ce que** le deuxième élément de serrage (420) présente essentiellement une forme de disque dont le bord extérieur (422) définit ledit plan incliné de la section trapézoïdale prévu pour coopérer avec le plan incliné (412) de la section trapézoïdale du premier élément de serrage (410).

14. Dispositif selon l'une des revendications précédentes, **caractérisé en ce que** le premier élément de montage (10) comprend au moins deux orifices traversants (13,14) destinés à constituer respectivement un orifice d'entrée (13) et un orifice de sortie (14) de la solution de liquide à séparer dans le dit canal de séparation (200).

15. Dispositif selon l'une des revendications précédentes, **caractérisé en ce que** le deuxième élément de montage (20) est formé à partir d'une feuille essentiellement plane dans laquelle l'évidement (22) précité est formé par découpe de préférence avec des bords d'extrémités latéraux biseautés (21a, 23a).

16. Dispositif selon l'une des revendications précédentes, **caractérisé en ce qu'**il comprend dans la masse du boîtier (100) au moins deux logements (130,140) traversants destinés à recevoir chacun au moins une pièce d'ajustement (70) de joints d'étanchéité (94) de circulation de l'entrée et de la sortie de ladite solution liquide, comprenant au moins un orifice de réception (72) d'une vis de serrage (90) elle-même pourvue d'un orifice traversant (92) servant respectivement à l'entrée (131) ou à la sortie (141) de ladite solution liquide à l'orifice d'entrée (53) ou de sortie (54) du cinquième élément (50).

17. Appareil de séparation comprenant un dispositif de séparation (1) tel que décrit à l'une quelconque des revendications précédentes.

18. Appareil selon la revendication 17, **caractérisé en ce que** l'appareil (600) est asymétrique, pour permettre un démontage rapide, et comprend une partie fixe (701) unique destinée à supporter un axe de rotation (702), ladite partie fixe (701) étant située entre un dispositif d'entraînement (707), comme un moteur, pour entraîner le dispositif (1) selon l'une quelconque des revendications 1 à 16 en rotation autour de l'axe de rotation (702), et le dispositif (1) selon l'une quelconque des revendications 1 à 16.

19. Appareil de séparation selon la revendication 17 ou 18, **caractérisé en ce que** l'appareil comprend sensiblement deux zones distinctes à savoir une première zone aisément accessible dite de séparation comprenant le dispositif de séparation (1) selon l'une quelconque des revendications 1 à 16, et une seconde zone dite d'entraînement (700) comprenant le dispositif d'entraînement (607).

20. Appareil de séparation selon la revendication 19, **caractérisé en ce que** la seconde zone d'entraînement (700) est située en dessous de la première zone de séparation (800).

21. Utilisation du dispositif (1) tel que défini la l'une quelconque des revendications 1 à 16 ou de l'appareil selon l'une quelconque des revendications 17 à 19 pour la séparation de particules en suspension dans un liquide porteur, en particulier par centrifugation, de préférence par une technique de fractionnement flux force dénommée FFF.

22. Utilisation selon la revendication 21, **caractérisé en ce que** les particules sont des cellules vivantes, en particulier des cellules vivantes d'origine humaines.

23. Utilisation selon la revendication 22, **caractérisé en ce que** les cellules vivantes sont des cellules souches.

24. Utilisation selon la revendication 21 ou 22, **caractérisé en ce que** les particules sont des cellules vivantes choisies parmi le groupe consistant en les cellules souches aviaires, les cellules souches neurales, les cellules précurseurs dans les gliomes, les cellules précurseurs dans les neuroblastomes, les cellules gliales de lignées cellulaires, des protéines, des acides nucléiques, et les virus.

## Claims

1. A device (1) for separating solutions containing suspended substances in a liquid carrier, notably within the scope of centrifugation, comprising a casing (100) comprising a cavity (110) defining a substantially cylindrical internal surface (120) with a predetermined height, and at least an actual first separation channel (200) with an annular substantially cylindrical shape with a substantially rectangular cross-section, formed by the combination of three mounting components : a first mounting component (10), a wall portion of which defines at least a first side wall of said separation channel, a second mounting component (20) including at least a recess (22) defining a second side wall of said separation channel (200) and the dimension of said separation channel (200), and a third mounting component (30) being positioned against the second component, defining a third side wall and completing said separation channel (200), said device comprising at least a second channel called counter-channel (300), positioned facing the first separation channel (200), between the first mounting component (10) and said internal wall (120) of the cavity (110) of the casing (100).

2. The device according to claim 1, wherein the thickness of the second mounting component (20) defines the thickness of fo the first first separation channel (200); and wherein the thickness of the counter-channel (300) is substantially identical with the thickness of the first separation channel (200).

3. The device according to claim 1 or 2, wherein the cross-section of the counter-channel (300) is larger than the cross-section of the first separation channel (200).

4. The device according to any one of the preceding claims, wherein the second mounting component (20) comprising said recess (22) is made out of a material having mechanical properties different from those of the material of the first mounting component (10) and/or of the third mounting component (30).

5. The device according to any one of the preceding claims, wherein the second mounting component (20) is made out of a material having sufficient mechanical properties so as to be essentially without creep, notably under the effect of a tightening compression.

6. The device according to any one of the preceding claims, wherein the counter-channel is formed by the combination of a fourth mounting component 40 positioned between the first mounting component (10) and the internal wall (120) of the casing (100) and comprising a second recess 42 at least as large as the first recess (22), said second recess 42 being positioned in the mounted state, facing the first recess, and a fifth mounting component (50) positioned against the internal wall (120) of said cavity (110) of the casing (100) .

7. The device according to any one of the preceding claims, wherein the fourth mounting component (40) is made out of a material having mechanical properties similar to or substantially identical with those of the material of the second mounting component (20).

8. The device according to any one of the preceding claims, wherein the material of the second mounting component (20) is compatible with biological substances, in particular, with notably transportable, living cells, preferably the entire mounting components (10,20,30,40,50) are compatible with biological substances, in particular, with notably transportable, living cells.

9. The device according to any one of the preceding claims, wherein the material of the second mounting component (20) is made out at least partly or preferably totally of a sterilizable material and the surface of which may be treated for limiting adsorption, in particular of a plastic material selected from the group consisting of a metallized plastic sheet such as mylar, a polycarbonate, or a metal or an alloy of at least one metal, in particular a biocompatible metal such as aluminium, a stainless noble metal.

10. The device according to any one of the preceding claims, wherein said device comprises at least one tightening member (400) positioned inside said cavity (110) of the casing (100), and having a height substantially equal to, preferably identical with, the height of said cavity (110) of the casing (100), in order to rest against substantially the entire apparent surface of the third mounting component (30).

11. The device according to any one of the preceding claims, wherein the tightening member (400) comprises at least two distinct tightening components (410, 420) with a complementary trapezoidal section having a joined contact surface (422,412) with an inclined plane defined by the inclined edge of the trapezium.

12. The device according to any one of the preceding claims, wherein the first tightening component (410), provided for resting against the third separation component (30), has a hollow cylindrical shape with a trapezoidal section (412), advantageously cut up into several distinct parts (415,416).

13. The device according to any one of the preceding claims, wherein the second tightening component (420) essentially has a disc shape, the external edge of which (422) defines said inclined plane of the trapezoidal section provided for cooperating with the inclined plane (412) of the trapezoidal section of the first tightening component (410).

14. The device according to any one of the preceding claims, wherein the first mounting component (10) comprises at least two through-ports (13,14) intended to respectively form an inlet port (13) and an outlet port (14) for the liquid solution to be separated in said separation channel (200).

15. The device according to any one of the preceding claims, the second mounting component (20) is formed from an essentially planar sheet in which the aforementioned recess (22) is formed by cut-out with bevelled side end edges (21a, 23a).

16. The device according to any one of the preceding claims, wherein the device comprises in the bulk of the casing (100) at least two through-housings (130,140) each intended to receive at least one part (70) for adjusting the flow seal gaskets (94) of the inlet and outlet for said liquid solution, comprising at least a receiving port (72) of a tightening screw (90) itself provided with a through-port (92) respectively to be used at the inlet (131) or at the outlet (141) for said liquid solution at the inlet port (53) or the outlet port (54) of the fifth component (50).

17. A separation apparatus comprising a separation device (1) of any one of the preceding claims.

18. The apparatus according to claim 17, wherein the apparatus (600) is asymmetrical, in order to allow rapid dismantling, and comprises a unique fixed part (701) for supporting an axis of rotation (702), said fixed part (701) being located between a deriving device (707), such as a motor, in order to derive the device (1) according to any of claims 1 to 16 into rotation around the axis of rotation (702), and the device (1) according to any one of claims 1 to 16.

19. The separation apparatus according to claim 17 or 18, wherein the apparatus substantially comprises two distinct areas : a first easily accessible area, so-called separation area, comprising the separation device (1) according to any one of claims 1 to 16, and a second so-called driving area (700) comprising the driving device (607).

20. The separation apparatus according to claim 19, wherein the second driving area (700) is located below the first separation area (800).

21. The use of device (1) as defined according to any of claims 1 to 16 or of the apparatus according to any of claims 17 to 19, for separating suspended particles in a liquid carrier, in particular by centrifugation, preferably by a flow-force fractionation technique called FFF.

22. The use according to claim 21, **characterized in that** the particles are living cells, in particular living cells of human origin.

23. The use according to claim 22, **characterized in that** the living cells are stem cells.

24. The use according to claim 21 or 22, **characterized in that** the particles are living cells selected from the group consisting of avian stem cells, neural stem cells, precursor cells in gliomas, precursor cells in neuroblastomas, glial cells of cell lines, proteins, nucleic acids, and viruses.

## Patentansprüche

1. Trennvorrichtung (1) für Lösungen, die Substanzen in Suspension in einer Trägerflüssigkeit enthalten, insbesondere im Rahmen eines Zentrifugierens, umfassend ein Gehäuse (100), das einen Hohlraum (110) aufweist, der eine im wesentlichen zylindrische Innenfläche (120) mit einer vorbestimmten Höhle beisitzt, und mindestens einen ersten eigentlichen Trennkanal (200) mit im wesentlichen ringsförmiger zylindrischer Form mit im wesentlichen rechteckigem Querschnitt, der durch die Kombination von drei Montageelementen mit einem Maß gebildet ist, das ausreicht, um in montierter Position die im wesentlichen zylindrische Innenfläche (120) des Hohlraums (110) im wesentlichen komplett abzudecken, nämlich ein erstes Montageelement (10), von dem ein Wandteil mindestens eine erste Seitenwand des Trennkanals definiert, ein zweites Montageelement (20), das mindestens eine Aussparung (22) aufweist, die eine zweite Seitenwand des Trennkanals (200) und das Maß des Trennkanals (200) definiert, und ein drittes Montageelement (30), das sich gegen das zweite Element positioniert und eine dritte Seitenwand definiert und den Trennkanal (200) vervollständigt, **dadurch gekennzeichnet, daß** sie mindestens einen zweiten Kanal aufweist, der Gegenkanal (300) genannt wird, der gegenüber dem ersten Trennkanal (200) zwischen dem ersten Montageelement (10) und der Innenwand (120) des Hohlraums (110) des Gehäuses (100) angeordnet ist.

2. Vorrichtung nach Anspruch 1, **dadurch gekennzeichnet, daß** die Stärke des zweiten Montageelements (20) die Stärke des ersten Trennkanals (200) definiert, und daß die Stärke des Gegenkanals (300) im wesentlichen gleich ist wie die Stärke des ersten Trennkanals (200).

3. Vorrichtung nach Anspruch 1 oder 2, **dadurch gekennzeichnet, daß** der Querschnitt des Gegenkanals (300) größer ist als der Querschnitt des ersten Trennkanals (200).

4. Vorrichtung nach der Ansprüche, **dadurch gekennzeichnet, daß** das zweite Montagelement (20), das die Aussparung (22) aufweist, aus einem Werkstoff hergestellt ist, der andere mechanische Eigenschaften als der Werkstoff des ersten Montageelements (10) und/oder des dritten Montageelements (30) hat.

5. Vorrichtung nach einem der vorhergehenden Ansprüche, **dadurch gekennzeichnet, daß** das zweite Montageelement (20) aus einem Werkstoff hergestellt ist, der mechanische Eigenschaften hat, die ausreichen, um im wesentlichen kriechfrei zu sein, insbesondere unter der Einwirkung eines Klemmdrucks.

6. Vorrichtung nach einem der vorhergehenden Ansprüche, **dadurch gekennzeichnet, daß** der Gegenkanal durch die Kombination eines vierten Montageelements (40) ausgebildet ist, das zwischen dem ersten Montageelement (10) und der Innenwand (120) des Gehäuses (100) angeordnet ist und eine zweite Aussparung (42) aufweist, die mindestens so groß ist wie die erste Aussparung (22), wobei die zweite Aussparung (42) im montierten Zustand gegenüber der ersten Aussparung angeordnet ist, und ein fünftes Montageelement (50), das gegen die Innenwand (120) des Hohlraums (110) des Gehäuses (100) angeordnet ist.

7. Vorrichtung nach einem der vorhergehenden Ansprüche, **dadurch gekennzeichnet, daß** das vierte Montageelement (40) aus einem Werkstoff hergestellt ist, der ähnliche oder im wesentlichen identische mechanische Eigenschaften wie der Werkstoff des zweiten Montageelements (20) hat.

8. Vorrichtung nach einem der vorhergehenden Ansprüche, **dadurch gekennzeichnet, daß** der Werkstoff des zweiten Montageelements (20) mit biologischen Substanzen kompatibel ist, insbesondere mit lebenden, insbesondere transportierbaren Zellen, wobei vorzugsweise alle Montageelemente (10, 20, 30, 40, 50) mit biologischen Substanzen kompatibel sind, insbesondere mit lebenden, insbesondere transportierbaren Zellen.

9. Vorrichtung nach einem der vorhergehenden Ansprüche, **dadurch gekennzeichnet, daß** der Werkstoff des zweiten Montageelements (20) mindestens teilweise oder vorzugsweise ganz aus einem sterilisierbaren Werkstoff hergestellt ist, dessen Oberfläche behandelt werden um die Adsorption einzuschränken, insbesondere ein Kunststoff, der aus der Gruppe ausgewählt ist, die aus einem metallisierten Kunststoffblatt besteht, wie zum Beispiel Mylar, ein Polycarbonat oder ein Metall oder eine Legierung mindestens eines Metalls, insbesondere ein biokompatibles Metall, wie zum Beispiel Aluminium, ein rostfreies Edelmetall.

10. Vorrichtung nach einem der vorhergehenden Ansprüche, **dadurch gekennzeichnet, daß** es mindestens ein Klemmorgan (400) aufweist, das im Inneren des Hohlraums (110) des Gehäuses (100) angeordnet ist und eine Höhe hat, die im wesentlichen gleich, vorzugsweise mit der Höhe des Hohlraums (110) des Gehäuses (100) identisch ist, um sich gegen im wesentlichen die komplette sichtbare Oberfläche des dritten Montageelements (30) anzulegen.

11. Vorrichtung nach einem der vorhergehenden Ansprüche, **dadurch gekennzeichnet, daß** das Klemmorgan (400) mindestens zwei separate Klemmelemente (410, 420) mit trapezförmigem komplementärem Querschnitt aufweist, die jeweils eine aneinander stoßende Berührungsfläche (422, 412) mit schiefer Ebene haben, die von dem schrägen Rand des Trapezes definiert ist.

12. Vorrichtung nach einem der vorhergehenden Ansprüche, **dadurch gekennzeichnet, daß** das erste Klemmelement (410), das vorgesehen ist, um sich gegen das dritte Trennelement (30) zu legen, eine hohle zylindrische Form mit Trapezquerschnitt (412) aufweist, die vorteilhafterweise in mehrere separate Stücke (415, 416) geschnitten ist.

13. Vorrichtung nach einem der vorhergehenden Ansprüche, **dadurch gekennzeichnet, daß** das zweite Klemmelement (420) im wesentlichen eine Scheibenform aufweist, deren Außenrand (422) die schiefe Ebene des trapezförmigen Querschnitts bildet, die vorgesehen ist, um mit der schiefen Ebene (412) des trapezförmigen Querschnitts des ersten Klemmelements (410) zusammenzuwirken.

14. Vorrichtung nach einem der vorhergehenden Ansprüche, **dadurch gekennzeichnet, daß** das erste Montagelement (10) mindestens zwei durchgehende Öffnungen (13, 14) aufweist, die dazu bestimmt sind, jeweils eine Eingangsöffnung (13) und eine Ausgangsöffnung (14) für die in dem Trennkanal (200) abzutrennende Flüssigkeitslösung zu bilden.

15. Vorrichtung nach einem der vorhergehenden Ansprüche, **dadurch gekennzeichnet, daß** das zweite Montageelement (20) ausgehend von einem im wesentlichen ebenen Blatt gebildet ist, in dem die oben erwähnte Aussparung (22) durch Ausschneiden vorzugsweise mit abgeschrägten seitlichen Endrändern (21 a, 23a) ausgebildet ist.

16. Vorrichtung nach einem der vorhergehenden Ansprüche, **dadurch gekennzeichnet, daß** sie in der Masse des Gehäuses (100) mindestens zwei durchgehende Aufnahmen (130, 140) aufweist, die dazu bestimmt sind, jeweils mindestens einen Justierteil (70) von Zirkulationsdichtungen (94) des Eingangs und des Ausgangs der Flüssigkeitslösung aufzunehmen, die mindestens eine Aufnahmeöffnung (72) für eine Klemmschraube (90) aufweisen, die selbst mit einer durchgehenden Öffnung (92) versehen ist, die jeweils als Eingang (131) oder als Ausgang (141) der Flüssigkeitslösung für die Eingangsöffnung (53) oder die Ausgangsöffnung (54) des fünften Elements (50) dient.

17. Trenngerät mit einer Trennvorrichtung (1), wie sie in einem der vorhergehenden Ansprüche beschrieben ist.

18. Gerät nach Anspruch 17, **dadurch gekennzeichnet, daß** das Gerät (600) asymmetrisch ist, um ein schnelles Demontieren zu erlauben, und einen einzigen stationären Teil (701) aufweiset, der dazu bestimmt ist, eine Rotationsachse (702) zu stützen, wobei der stationäre Teil (701) zwischen einer Antriebsvorrichtung (707), wie zum Beispiel ein Motor zum Antreiben der Vorrichtung (1) nach einem der Ansprüche 1 bis 16 in Drehung um die Rotationsachse (702), und der Vorrichtung (1) nach einem der Ansprüche 1 bis 16 liegt.

19. Trenngerät nach Anspruch 17 oder 18, **dadurch gekennzeichnet, daß** das Gerät im wesentlichen zwei getrennte Zonen aufweist, nämlich eine erste, leicht zugängliche Zone, Trennzone die die Trennvorrichtung (1) nach einem der Ansprüche 1 bis 16 aufweist, und eine zweite Zone, Antriebszone (700) genannt, die die Antriebsvorrichtung (607) aufweist.

20. Trenngerät nach Anspruch 19, **dadurch gekennzeichnet, daß** die zweite Antriebszone (700) unterhalb der ersten Trennzone (800) liegt.

21. Einsatz der Vorrichtung (1), wie sie in einem der Ansprüche 1 bis 16 definiert ist, oder des Geräts nach einem der Ansprüche 17 bis 19, zum Trennen von Partikeln in Suspension in einer Trägerflüssigkeit, insbesondere durch Zentrifugieren, vorzugsweise durch eine Feld-Fluss-Fraktionierung, FFF genannt.

22. Einsatz nach Anspruch 21, **dadurch gekennzeichnet, daß** die Partikel lebende Zellen sind, insbesondere lebende Zellen menschlichen Ursprungs.

23. Einsatz nach Anspruch 22, **dadurch gekennzeichnet, daß** die lebenden Zellen Stammzellen sind.

24. Einsatz nach Anspruch 21 oder 22, **dadurch gekennzeichnet, daß** die Partikel lebende Zellen sind, die aus der Gruppe ausgewählt sind, die aus Geflügelstammzellen, neuralen Stammzellen, Vorläuferzellen in Gliomen, Vorläuferzellen in Neuroblastomen, Gliazellen von Zelllinien, Proteinen, Nukleinsäuren und den Viren besteht.
